# EUROPÄISCHE PATENTSCHRIFT

(11) **EP 1 946 088 B1**
(45) Veröffentlichungstag und Bekanntmachung des Hinweises auf die Patenterteilung: **29.07.2009**
(21) Anmeldenummer: 06828890.1
(22) Anmeldetag: 31.10.2006
(51) Int. Cl.: G01N 23/223

(54) **VORRICHTUNG ZUR RÖNTGEN-TOMOSYNTHESE**
X-RAY TOMOSYNTHESIS DEVICE
DISPOSITIF DE TOMOSYNTHESE AUX RAYONS X

(30) Priorität: 07.11.2005 DE 202005017496 U
(43) Veröffentlichungstag der Anmeldung: 23.07.2008
(73) Patentinhaber: COMET GmbH, 30827 Garbsen (DE)
(72) Erfinder: REINHOLD, Alfred, 31515 Wunstorf (DE)
(74) Vertreter: DTS München
(86) Internationale Anmeldenummer: PCT/EP2006/010441
(87) Internationale Veröffentlichungsnummer: WO 2007/051587

(56) Entgegenhaltungen:
- EP-A1- 0 697 712
- DE-A1- 3 543 598
- DE-A1- 10 338 742
- DE-A1- 19 934 987
- DE-C1- 19 509 516
- US-A1- 5 490 193
- US-A1- 2005 025 283
- M. SCHEER, E. TROTT, G. ZAHS: "Lineare Polarisation der Röntgen-Bremsstrahlung dünner Antikathoden" ZEITSCHRIFT FÜR PHYSIK A HADRONS AND NUCLEI, Bd. 209, Nr. 1, 18. September 1967 (1967-09-18), Seiten 68-76, XP002426511 ISSN 0939-7922

## Beschreibung

Die Erfindung betrifft eine Vorrichtung der im Oberbegriff des Anspruchs 1 genannten Art zur Röntgen-Tomosynthese.

Derartige Vorrichtungen sind allgemein bekannt und werden beispielsweise zur Untersuchung von elektronischen Bauteilen, Flachbaugruppen oder Leiterplatten eingesetzt.

Röntgen-Laminographie- oder -tomosyntheseverfahren erfordern prinzipbedingt eine Relativbewegung eines Röntgenstrahles einer Röntgenquelle zu einem zu untersuchenden Objekt. Technische Einzelheiten von Röntgen-Laminographie- oder -Tomosyntheseverfahren sind dem Fachmann allgemein bekannt, beispielsweise durch DE 103 08 529 A1, und werden daher hier nicht näher erläutert.

Durch DE 103 08 529 A1 ist eine Vorrichtung zur Röntgen-Tomosynthese bekannt, die eine Röntgenröhre mit einer Röntgenquelle zur Erzeugung von Röntgenstrahlung zur abtastenden Durchstrahlung eines zu untersuchenden Objektes und eine Halterung für das zu untersuchende Objekt aufweist. Die bekannte Vorrichtung weist ferner einen Röntgendetektor zur Detektion der Röntgenstrahlung nach Durchstrahlung des zu untersuchenden Objektes auf. Bei der bekannten Vorrichtung ist das zu untersuchende Objekt während der Untersuchung ortsfest in seiner Halterung gehalten, während zur Durchführung des Laminographie- oder Tomosyntheseverfahrens sowohl die Röntgenröhre als auch der Röntgendetektor relativ zu dem Objekt bewegt werden. Ähnliche Vorrichtungen sind auch durch EP 0 683 389 A1, DE 101 42 159 A1, DE 102 42 610 A1, DE 199 51 793 A1, DE 103 17 384 A1 und DE 103 09 887 A1 bekannt.

Ein Nachteil dieser bekannten Vorrichtungen besteht darin, daß aufgrund der erforderlichen Bewegung sowohl der Röntgenquelle als auch des Röntgendetektors relativ zu dem zu untersuchenden Objekt erhebliche Massen bewegt werden müssen, was einen erheblichen mechanischen Aufwand bedingt und die bekannten Vorrichtungen damit aufwendig und teuer in der Herstellung macht. Dieser Nachteil wird dadurch noch verstärkt, daß die Bewegung der Massen zur Erzielung einer ausreichenden Bildqualität mit hoher Präzision und bezogen auf die Bewegung der Röntgenquelle einerseits und die Bewegung des Detektors andererseits synchron erfolgen muß.

In Abwandlung der vorgenannten Vorrichtungen ist bereits vorgeschlagen worden, anstelle eines beweglichen Röntgendetektors mehrere ortsfeste Röntgendetektoren zu verwenden. Bei einer entsprechenden Vorrichtung ist jedoch weiterhin eine Bewegung der Röntgenröhre erforderlich, so daß prinzipiell die oben geschilderten Nachteile weiter bestehen.

Ferner sind bereits Vorrichtungen zur Röntgen-Laminographie bzw. -Tomosynthese vorgeschlagen worden, bei denen die Röntgenquelle ortsfest angeordnet ist und das zu untersuchende Objekt und der Röntgendetektor bewegt werden. Auch bei diesen bekannten Vorrichtungen besteht der prinzipielle Nachteil, daß erhebliche Massen bewegt werden müssen.

Durch DE 196 04 802 A1 ist eine Vorrichtung zur Röntgen-Tomosynthese bekannt, bei der eine Röntgenquelle und ein Röntgendetektor ortsfest angeordnet sind, während eine Halterung für das zu untersuchende Objekt während der Untersuchung bewegt wird. Ähnliche Vorrichtungen sind auch durch DE 197 23 074, US 6,748,046 B2, DE 37 903 88 T1 und DE 102 38 579 A1 bekannt.

Ferner sind Vorrichtungen zur Röntgen-Tomosynthese bekannt, beispielsweise durch DE 103 38 742 A1, bei denen eine ortsfeste Röntgenröhre mit einer innerhalb der Röntgenröhre beweglichen Röntgenquelle, eine ortsfeste Halterung für das zu untersuchende Objekt und ein ortsfester Röntgendetektor verwendet werden, wobei zur Erzielung der erforderlichen räumlichen Auflösung ein bewegliches Spiegelsystem verwendet wird, das die Röntgenstrahlung nach Durchstrahlung des zu untersuchenden Objektes entsprechend der jeweiligen Position des Röntgenstrahles auf den Röntgendetektor lenkt. Eine ähnliche Vorrichtung ist auch durch WO 89/04477 bekannt.

Auch bei diesen Vorrichtungen ist nachteilig, daß noch erhebliche Massen mit hoher Präzision bewegt werden müssen. Außerdem bedingt das erforderliche Spiegelsystem einen erheblichen mechanischen Aufwand und verteuert die Herstellung der bekannten Vorrichtungen.

Der Erfindung liegt die Aufgabe zugrunde, eine Vorrichtung zur Röntgen-Tomosynthese anzugeben, die vereinfacht und damit kostengünstiger herstellbar ist und gleichzeitig eine hohe Bildqualität der Röntgenbilder ermöglicht.

Diese Aufgabe wird durch die im Anspruch 1 angegebene Lehre gelöst.

Der Grundgedanke der erfindungsgemäßen Lehre besteht darin, eine Bewegung des Brennflecks, an dem beim Auftreffen eines Teilchenstrahles elektrisch geladener Teilchen auf ein Target Röntgenstrahlung erzeugt wird, zu erzielen, ohne daß eine Bewegung der der Röntgenstrahlungsquelle oder den Teilchenstrahl erzeugenden Teilchenquelle erforderlich ist.

Erfindungsgemäß wird dieser Grundgedanke durch ein Target realisiert, das wenigstens ein aus einem Trägermaterial bestehendes Trägerelement aufweist, an dem eine Mehrzahl von zueinander beabstandeten, das Trägerelement jeweils nur teilweise bedeckenden Targetelementen angeordnet ist.

Erfindungsgemäß sind das Trägermaterial und das Targetmaterial unterschiedliche Materialien. Hierbei ist das Targetmaterial im Hinblick auf eine Emission von Röntgenstrahlung einer gewünschten Wellenlänge oder in einem gewünschten Wellenlängenbereich ausgewählt, während das Trägermaterial im Hinblick auf seinen Wärmeleitkoeffizienten und seine hohe Transparenz für Röntgenstrahlung ausgewählt ist. Erfindungsgemäß ist der Querschnitt des Trägerelementes senkrecht zur Strahlungsrichtung definiert größer als der Querschnitt der Targetelemente in dieser Richtung, so daß die Targetelemente nur einen Teil der Oberfläche des Trägerelementes bedeckt. Weiterhin weist das Trägermaterial eine geringere Dichte, eine hohe Wärmeleitfähigkeit und eine gewisse, vorzugsweise durch Dotierung erhöhte elektrische Leitfähigkeit auf, während das Targetmaterial ein Material hoher Dichte, beispielsweise Wolfram, ist.

Auftreffende Elektronen werden in dem Targetmaterial auf sehr kurzem Wege abgebremst, wobei bevorzugt kurzwellige Röntgenstrahlung entsteht. In dem Trägermaterial geringer Dichte werden eindringende Elektronen hingegen auf sehr langen Wegen abgebremst, so daß mehr langwellige Strahlung entsteht, die beispielsweise mittels eines geeigneten Filters ausgefiltert werden kann. Daraus ergibt sich, daß erfindungsgemäß Form, Größe und Ort des Brennflecks durch Form, Größe und Ort des jeweiligen Targetelementes festgelegt sind.

Da erfindungsgemäß Röntgenstrahlung der gewünschten Wellenlänge oder in einem gewünschten Wellenlängenbereich ausschließlich in dem jeweils bestrahlten Targetelement erzeugt wird und das betreffende Targetelement somit den Brennfleck der Röntgenröhre definiert, sind Form und Größe des Brennflecks nicht mehr von dem Querschnitt des Elektronenstrahles abhängig, sondern ausschließlich von dem Querschnitt des jeweiligen Targetelementes, sofern der Elektronenstrahl bei Betrieb der Röntgenröhre das Target stets vollflächig bestrahlt.

Zwar wird auch in dem Trägerelement Röntgenstrahlung erzeugt. Diese hat jedoch eine andere Wellenlänge bzw. liegt in einem anderen Wellenlängenbereich als die in dem Targetelement erzeugte Nutzstrahlung, so daß sie ohne weiteres herausgefiltert werden kann.

Aufgrunddessen kann erfindungsgemäß der Brennfleck einer erfindungsgemäßen Vorrichtung nahezu beliebig klein gestaltet werden, wobei Grenzen lediglich durch zur Verfügung stehende Mikrostrukturierungsverfahren zum Bilden der Targetelemente als Mikro- oder Nanostrukturen gesetzt sind.

Da Form, Größe und Ort des Brennflecks ausschließlich durch Form, Größe und Ort des Targetelementes festgelegt sind, entfallen bei einer erfindungsgemäßen Vorrichtung konstruktiv aufwendige Maßnahmen, die bei herkömmlichen Vorrichtungen erforderlich sind, um Form, Größe und Ort des Elektronenstrahles zu stabilisieren, der bei den bekannten Vorrichtungen Form, Größe und Ort des Brennflecks der Röntgenröhre definiert. Damit ermöglicht die erfindungsgemäße Lehre mit äußerst geringem Aufwand den Aufbau einer Röntgen-Tomosynthese-Vorrichtung, bei der Form, Größe und Ort des jeweiligen Brennflecks hochstabil sind und die damit bei Verwendung im bildgebenden Verfahren eine besonders hohe Bildqualität ermöglicht.

Als Targetmaterial kann entsprechend den jeweiligen Anforderungen ein Material verwendet werden, das bei Beschuß mit Elektronen Röntgenstrahlung einer gewünschten Wellenlänge oder in einem gewünschten Wellenlängenbereich emittiert.

Bei Bestrahlung mit dem Teilchenstrahl, beispielsweise einem Elektronenstrahl, wirkt das jeweilige Targetelement als Röntgenstrahlungsquelle. Dadurch, daß das Target erfindungsgemäß eine Mehrzahl von zueinander beabstandeten Targetelementen aufweist, von denen jedes als Röntgenstrahlungsquelle fungieren kann, weist die erfindungsgemäße Vorrichtung eine Mehrzahl von möglichen Röntgenstrahlungsquellen auf, die räumlich zueinander beabstandet sind und damit eine Durchstrahlung der Probe unter unterschiedlichen Winkeln ermöglichen.

Um eines der Targetelemente als Röntgenstrahlungsquelle wirken zu lassen, ist es lediglich erforderlich, dieses Targetelement mit dem Teilchenstrahl zu bestrahlen, so daß es Röntgenstrahlung emittiert. Erfindungsgemäß sind hierzu Ablenkmittel vorgesehen, durch die der Teilchenstrahl zum Auftreffen auf die Targetelemente ablenkbar ist. Durch entsprechende Ablenkung ist der Teilchenstrahl somit wahlweise auf das jeweils gewünschte Targetelement richtbar, das beim Auftreffen der elektrisch geladenen Teilchen Röntgenstrahlung emittiert und somit als Röntgenstrahlungsquelle wirkt. Durch zeitlich aufeinanderfolgendes Bestrahlen unterschiedlicher Targetelemente mittels des Teilchenstrahles sind somit zeitlich aufeinanderfolgend unterschiedliche Orte der Röntgenstrahlungsquelle und damit unterschiedliche Durchstrahlungswinkel beim Durchstrahlen der Probe möglich.

Da die Ablenkung des Teilchenstrahles beispielsweise durch geeignete Spulen oder Spulenanordnungen erfolgen kann, ist erfindungsgemäß eine Veränderung des Ortes der Röntgenstrahlungsquelle relativ zu der Probe möglich, ohne daß hierzu die Röntgenstrahlungsquelle oder Teile davon bewegt werden müssen.

Da somit eine Veränderung des Ortes der Röntgenstrahlungsquelle und damit des Durchstrahlungswinkels beim Durchstrahlen der Probe keinerlei Bewegung nennenswerter Massen erfordert, kann eine solche Veränderung quasi zeitverzögerungsfrei ausgeführt werden. Auf diese Weise können Proben mittels einer erfindungsgemäßen Vorrichtung sehr viel schneller untersucht werden als mit herkömmlichen Vorrichtungen. Auf diese Weise sind die Taktzeiten bei der Untersuchung von Proben wesentlich verringert, so daß die Untersuchung von Proben zeitsparender und damit kostengünstiger gestaltet ist.

Ein weiterer Vorteil der erfindungsgemäßen Vorrichtung besteht darin, daß sie grundsätzlich ohne mechanische Bewegung massenbehafteter Komponenten auskommt. Auf diese Weise ist die erfindungsgemäße Vorrichtung besonders einfach im Aufbau und damit kostengünstig sowie robust gestaltet.

Form, Größe und Anteil der Targetelemente sind entsprechend den jeweiligen Anforderungen in weiten Grenzen wählbar. Die Targetelemente können beispielsweise Mikro- oder Nanostrukuren sein, die mittels eines Mikrostrukturierungsverfahrens an dem Trägerelement gebildet sind. Als Mikrostrukturierungsverfahren können beispielsweise Depositionsverfahren, beispielsweise dreidimensionale additive Nanolithographie oder Ionenstrahlsputtern, aber auch abtragende Verfahren, beispielsweise Elektronenlithographie oder Ätzverfahren, verwendet werden. Derartige Verfahren sind dem Fachmann allgemein bekannt und werden daher hier nicht näher erläutert.

Erfindungsgemäß können die Targetelemente beispielsweise und insbesondere auf der Oberfläche des Trägerelementes gebildet sein. Falls entsprechend den jeweiligen Anforderungen erforderlich, können die Targetelemente jedoch auch in ein Trägerelement eingebettet sein, sofern sichergestellt ist, daß die elektrisch geladenen Teilchen die Targetelemente erreichen, so daß diese Röntgenstrahlung emittieren.

Beispielsweise und insbesondere können erfindungsgemäß eine Teilchenquelle zur Erzeugung des Teilchenstrahls elektrisch geladener Teilchen, eine Halterung für eine zu untersuchende Probe und ein Detektor zur Detektion der Röntgenstrahlung nach Durchstrahlung der Probe relativ zueinander ortsfest angeordnet sein. Bei einer entsprechend aufgebauten erfindungsgemäßen Vorrichtung sind in der oben beschriebenen Weise unterschiedliche Durchstrahlungswinkel beim Durchstrahlen der Probe realisierbar, ohne daß eine der vorgenannten Baugruppen bewegt werden muß. Da die Geschwindigkeit des Wechsels des Durchstrahlungswinkels ausschließlich von dem Zeitintervall abhängig ist, innerhalb dessen der Teilchenstrahl von einem Targetelement auf ein anderes Targetelement abgelenkt werden kann und eine solche Ablenkung zeitlich quasi zeitverzögerungsfrei möglich ist, kann bei einer erfindungsgemäßen Vorrichtung der Durchstrahlungswinkel quasi zeitverzögerungsfrei verändert werden. Dies ermöglicht in der oben beschriebenen Weise eine besonders hohe Geschwindigkeit bei der Untersuchung von Proben.

Unter einer ortsfesten Anordnung von Baugruppen relativ zueinander wird erfindungsgemäß verstanden, daß diese Baugruppen zur Erzielung unterschiedlicher Durchstrahlungswinkel nicht relativ zueinander bewegt werden müssen. In diesem Zusammenhang ist es zweckmäßig, daß erfindungsgemäß ein Target verwendet wird, dessen Fläche mindestens so groß ist wie die maximal zu untersuchende Fläche der Probe. Ferner ist es in diesem Zusammenhang zweckmäßig, wenn als Detektor zur Detektion der Röntgenstrahlung nach Durchstrahlung der Probe ein Röntgenbild-Detektor verwendet wird, dessen Eingangs-Bildfläche größer ist als die maximal zu untersuchende Fläche der Probe.

Falls entsprechend den jeweiligen Anforderungen erwünscht, ist es erfindungsgemäß jedoch auch möglich, die Teilchenquelle, die Halterung für die Probe und den Detektor relativ zueinander beweglich anzuordnen. Erforderlich ist eine Bewegung dieser Baugruppen relativ zueinander während einer Durchstrahlung und Untersuchung einer Probe jedoch erfindungsgemäß nicht.

Eine Auswertung der von dem Detektor aufgenommenen Röntgenbilder kann beispielsweise mittels Verfahren der Computer-Tomographie, insbesondere der planaren Computer-Tomographie, und der Bildverarbeitung erfolgen. Derartige Verfahren sind allgemein bekannt und werden daher hier nicht näher erläutert.

Bei einem nichtkreisförmigen Brennfleck wird erfindungsgemäß unter dem Durchmesser die größte Ausdehnung des Brennflecks in der Brennebene bzw. Focusebene verstanden.

Zahlenwerte von Wärmeleitkoeffizienten beziehen sich auf Zimmertemperatur.

Zweckmäßigerweise weisen die Ablenkmittel wenigstens eine Spule oder Spulenanordnung und/oder wenigstens eine elektrostatische Ablenkvorrichtung auf. Mit entsprechenden Spulen oder Spulenanordnungen bzw. Ablenkvorrichtungen ist der Teilchenstrahl quasi zeitverzögerungsfrei zum Auftreffen auf die Targetelemente ablenkbar.

Eine vorteilhafte Weiterbildung der erfindungsgemäßen Lehre sieht vor, daß eine Teilchenquelle zur Erzeugung des Teilchenstrahles relativ zu einem Detektor zur Detektion der Röntgenstrahlung nach Durchstrahlung der Probe zumindest während-der Untersuchung der Probe ortsfest angeordnet ist. Da erfindungsgemäß eine Relativbewegung zwischen der Teilchenquelle und dem Detektor nicht erforderlich ist, ergibt sich auf diese Weise ein besonders einfacher und damit kostengünstiger sowie robuster Aufbau. Unter einer Untersuchung wird erfindungsgemäß ein zeitlich unmittelbar aufeinanderfolgendes Aufnehmen einer Mehrzahl von Röntgenbildern unter Verwendung unterschiedlicher Durchstrahlungswinkel verstanden.

Eine andere vorteilhafte Weiterbildung der erfindungsgemäßen Lehre sieht vor, daß eine Halterung für die zu untersuchende Probe relativ zu der Teilchenquelle und/oder dem Detektor zumindest während der Untersuchung der Probe ortsfest angeordnet ist. Insbesondere in Kombination mit der vorgenannten Ausführungsform ergibt sich ein besonders einfacher und damit kostengünstiger sowie robuster Aufbau, bei dem die Teilchenquelle, die Halterung für die Probe und der Detektor relativ zueinander ortsfest angeordnet sind.

Wird erfindungsgemäß ein großflächiges Target verwendet, so sind zwangsläufig große Ablenkwinkel des Elektronenstrahles bei gleichzeitig großer Fokuslänge (Brennweite) des zur Elektronenstrahl-Fokussierung und -Ablenkung erforderlichen elektronenoptischen Systems erforderlich. Dies führt zu Verzerrungen von Form und Abmessungen des Brennflecks, die eine Verschlechterung der Röntgenbildqualität nach sich ziehen können. Um eine hohe Bildqualität zu gewährleisten und damit insbesondere eine Untersuchung zunehmend miniaturisierter Proben, beispielsweise von Mehrschicht-Leiterplatten zu ermöglichen, sieht eine außerordentlich vorteilhafte Weiterbildung der erfindungsgemäßen Lehre vor, daß die Targetelemente in der Draufsicht auf das Target im wesentlichen die gleiche Kontur aufweisen. Da erfindungsgemäß Röntgenstrahlung ausschließlich oder nahezu ausschließlich von den Targetelementen erzeugt wird und Form und Größe des Brennflecks der Röntgenröhre somit durch Form und Größe des jeweils Röntgenstrahlung emittierenden Targetelementes definiert sind, bleiben bei dieser Ausführungsform Verzerrungen hinsichtlich Form und Abmessungen des Querschnitts des Elektronenstrahles ohne Auswirkungen auf Form und Größe des Brennflecks. Unabhängig davon, welches der Targetelemente jeweils durch den Teilchenstrahl bestrahlt wird, hat der Brennfleck aufgrund der Konturgleichheit der Targetelemente somit stets die gleiche Größe und Abmessungen. Auf diese Weise ist die Bildqualität der mittels der erfindungsgemäßen Vorrichtung aufgenommenen Röntgenbilder wesentlich erhöht.

Form und Größe der Targetelemente sind entsprechend den jeweiligen Anforderungen in weiten Grenzen wählbar. Eine vorteilhafte Weiterbildung der erfindungsgemäßen Lehre sieht vor, daß die Targetelemente in der Draufsicht auf das Target im wesentlichen kreisförmig begrenzt sind. Auf diese Weise ergeben sich in strahlenoptischer Hinsicht besonders günstige Verhältnisse.

Eine andere vorteilhafte Weiterbildung der erfindungsgemäßen Lehre sieht vor, daß das Target als Transmissionstarget ausgebildet ist.

Eine andere vorteilhafte Weiterbildung der erfindungsgemäßen Lehre sieht vor, daß der Querschnitt des Teilchenstrahles derart größer als der jeweilige Querschnitt der Targetelemente gewählt ist, daß der Teilchenstrahl beim Richten auf ein Targetelement dasselbe stets vollflächig bestrahlt. Auf diese Weise ist sichergestellt, daß Verzerrungen hinsichtlich Form und Abmessungen des Querschnitts des Teilchenstrahles ohne Auswirkungen auf Form und Abmessungen des durch das jeweils bestrahlte Targetelement gebildeten Brennflecks bleiben.

Gemäß einer anderen vorteilhaften Weiterbildung der erfindungsgemäßen Lehre sind Steuerungsmittel vorgesehen, durch die die Ablenkmittel derart ansteuerbar sind, daß der Teilchenstrahl in einer vorgegebenen oder vorgebbaren Reihenfolge einzelne oder sämtliche der Targetelemente bestrahlt, derart, daß die bestrahlten Targetelemente entsprechend der vorgegebenen oder vorgebbaren Reihenfolge Röntgenstrahlung emittieren. Die Ansteuerung der Targetelemente durch die Steuerungsmittel kann hierbei entsprechend den jeweiligen Anforderungen gewählt werden, um beispielsweise um eine mäanderförmige, spiralförmige oder linienförmige Abtastung der Targetfläche und damit eine zeitlich aufeinanderfolgende Aktivierung der auf dem Abtastweg liegenden Targetelemente in Hinblick auf eine Emission von Röntgenstrahlung zu erzielen.

Eine andere vorteilhafte Weiterbildung der erfindungsgemäßen Lehre sieht vor, daß die Steuerungsmittel die Ablenkmittel derart ansteuern, daß der Teilchenstrahl jeweils nur eines der Targetelemente bestrahlt. Bei dieser Ausführungsform werden einzelne oder sämtliche der Targetelemente zeitlich aufeinanderfolgend mit dem Teilchenstrahl bestrahlt, so daß sie zeitlich aufeinanderfolgend Röntgenstrahlung emittieren.

Insbesondere dann, wenn der erfindungsgemäß zur Detektion der Röntgenstrahlung nach Durchstrahlung der Probe ein großflächiger Detektor verwendet wird, der aus mehreren Detektoren geringerer Fläche zusammengesetzt ist, ist es erfindungsgemäß jedoch auch möglich, gleichzeitig wenigstens zwei Targetelemente zu bestrahlen, so daß gleichzeitig wenigstens zwei Röntgenstrahlungsquellen wirksam sind. Voraussetzung hierfür ist jedoch, daß sich die durch die unterschiedlichen Röntgenstrahlungsquellen erzeugten Röntgenbilder nicht in einer die Bildqualität beeinträchtigenden Weise überlagern. Insofern sieht eine andere vorteilhafte Weiterbildung der erfindungsgemäßen Lehre vor, daß die Steuerungsmittel die Ablenkmittel derart ansteuern, daß gleichzeitig wenigstens zwei Targetelemente durch einen Teilchenstrahl bestrahlt werden. Bei einer solchen Ausführungsform können mehrere Teilchenquellen zur Erzeugung mehrerer Teilchenstrahlen verwendet werden.

Das Trägermaterial, aus dem das Trägerelement besteht, ist entsprechend den jeweiligen Anforderungen innerhalb weiter Grenzen wählbar. Es weist eine geringere Dichte als das Targetmaterial, eine hohe Wärmeleitfähigkeit und eine vorzugsweise durch Dotierung erhöhte elektrische Leitfähigkeit sowie eine hohe Transparenz für Röntgenstrahlung auf.

Um eine besonders hohe Wärmeleitung zu erzielen, sieht eine vorteilhafte Weiterbildung der erfindungsgemäßen Lehre vor, daß das Trägerelement wenigstens teilweise aus einem Trägermaterial besteht, dessen Wärmeleitkoeffizient ≥ 10 W (cm x K), vorzugsweise ≥ 20 W (cm x K) ist. Auf diese Weise ist eine besonders effiziente Ableitung von Wärme gewährleistet, die beim zur Erzeugung von Röntgenstrahlung notwendigen Beschuß des jeweiligen Targetelementes mit hochenergetisch beschleunigten elektrisch geladenen Teilchen, insbesondere Elektronen besteht.

Um eine besonders gute Wärmeleitung zu erzielen, sieht eine andere Weiterbildung der erfindungsgemäßen Lehre vor, daß das Trägermaterial Diamant ist oder Diamant enthält.

Gemäß einer anderen vorteilhaften Weiterbildung der erfindungsgemäßen Lehre ist das Trägermaterial zur Erhöhung der elektrischen Leitfähigkeit dotiert. Dieser Weiterbildung liegt die Erkenntnis zugrunde, daß beispielsweise bei Benutzung von Diamant als Trägermaterial zwar eine ausreichende Ableitung der entstehenden Wärme gewährleistet ist, sich gleichzeitig jedoch aufgrund der elektrischen Isolationseigenschaften von Diamant das Target elektrisch auflädt. Weiterhin liegt dieser Weiterbildung die Erkenntnis zugrunde, daß eine elektrische Aufladung des Targets die Bildqualität insofern verschlechtert, als ein unkontrolliertes Ablösen von elektrischen Ladungen und Wiederauftreffen auf das Target zu einer unkontrollierten zusätzlichen Emission von Röngenstrahlung führt. Wird beispielsweise und insbesondere als Trägermaterial Diamant verwendet, der ein elektrischer Isolator ist, so kann der Diamant durch Dotierung mit einem geeigneten Dotierungsmaterial, beispielsweise einem Metall oder Bor oder mit einem wenige Nanometer Dicke betragenden Metall-Überzug auf der dem Teilchenstrahl zugewandten Oberfläche, elektrisch leitfähig gemacht werden. Infolgedessen können elektrische Ladungen, beispielsweise Elektronen, von dem Target abgeleitet werden, so daß eine die Bildqualität beeinträchtigende elektrische Aufladung des Targets zuverlässig vermieden ist. Es hat sich überraschend gezeigt, daß auf diese Weise die Bildqualität der mit einer erfindungsgemäßen Vorrichtung aufgenommenen Bilder wesentlich verbessert ist.

Eine andere vorteilhafte Weiterbildung der erfindungsgemäßen Lehre sieht vor, daß das Target ein Filter aufweist, das für in den Targetelementen erzeugte Röntgenstrahlung durchlässig ist und in dem Trägerelement erzeugte Röntgenstrahlung wenigstens teilweise sperrt. Auf diese Weise ist sichergestellt, daß ausschließlich Röntgenstrahlung einer gewünschten Wellenlänge oder in einem gewünschten Wellenlängenbereich die Probe durchstrahlt.

Die Erfindung wird nachfolgend anhand der beigefügten, stark schematisierten Zeichnung näher erläutert, in der ein Ausführungsbeispiel einer erfindungsgemäßen Vorrichtung dargestellt ist. Dabei bilden alle beanspruchten, beschriebenen oder in der Zeichnung dargestellten Merkmale für sich genommen oder in beliebiger Kombination miteinander den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Es zeigt:
- Fig. 1: eine schematische Schnittansicht durch eine Mehrschicht-Leiterplatte,
- Fig. 2: eine schematische Schnittansicht einer Mehrschicht-Leiterplatte während der Untersuchung mit einem Röntgen-Tomosyn- these-Verfahren gemäß dem Stand der Technik,
- Fig. 3: in gleicher Darstellung wie Fig. 2 eine Mehrschicht-Leiterplatte während der Untersuchung mit einem anderen Tomosyn- these-Verfahren gemäß dem Stand der Technik,
- Fig. 4: eine schematische Perspektivansicht ei- nes Ausführungsbeispieles einer erfin- dungsgemäßen Tomosynthese-Vorrichtung,
- Fig. 5: eine schematische Seitenansicht der Vor- richtung gemäß Fig. 4 bei einem ersten Abstand zwischen einer zu untersuchenden Probe und einem Detektor,
- Fig. 6: in gleicher Darstellung wie Fig. 5 die Vorrichtung gemäß Fig. 4 bei einem zwei- ten Abstand zwischen der Probe und dem Detektor,
- Fig. 7: eine Schnittansicht durch das Target der Vorrichtung gemäß Fig. 4 im Bereich ei- nes Targetelementes,
- Fig. 8: eine zu Fig. 7 ähnliche Ansicht,
- Fig. 9: eine Draufsicht auf das Target gemäß Fig. 7 im Bereich eines Targetelementes,
- Fig. 10: eine Schnittansicht eines alternativen Ausführungsbeispieles eines Targets ei- ner erfindungsgemäßen Vorrichtung,
- Fig. 11: eine Draufsicht auf das Target gemäß Fig. 10,
- Fig. 12: eine zu Fig. 11 ähnliche Draufsicht,
- Fig. 13: eine weitere zu Fig. 11 ähnliche Drauf- sicht,
- Fig. 14: eine Ansicht zur Verdeutlichung der Ver- formung des Strahlquerschnittes eines Teilchenstrahles in verschiedenen räum- lichen Positionen,
- Fig. 15: eine Draufsicht auf eine alternative Ausführungsform eines Targets der Vor- richtung gemäß Fig. 4 bei Bestrahlung mit einem Elektronenstrahl,
- Fig. 16: eine schematische Darstellung zur Ver- deutlichung einer Brennfleck-Positionie- rungs-Sequenz der Vorrichtung gemäß Fig. 4,
- Fig. 17: eine schematische Darstellung von mit- tels der Brennfleck-Positionierungs-Se- quenz gemäß Fig. 16 erzeugten Durch- strahlungsbildern und
- Fig. 18: in gleicher Darstellung wie Fig. 16 bei- spielhaft alternative Brennfleck-Posi- tionierungs-Sequenzen.

In den Figuren der Zeichnung sind gleiche Bauteile mit den gleichen Bezugszeichen versehen. Die Zeichnungen sind stark schematisiert und stellen reine Prinzipskizzen dar, die nicht maßstäblich sind.

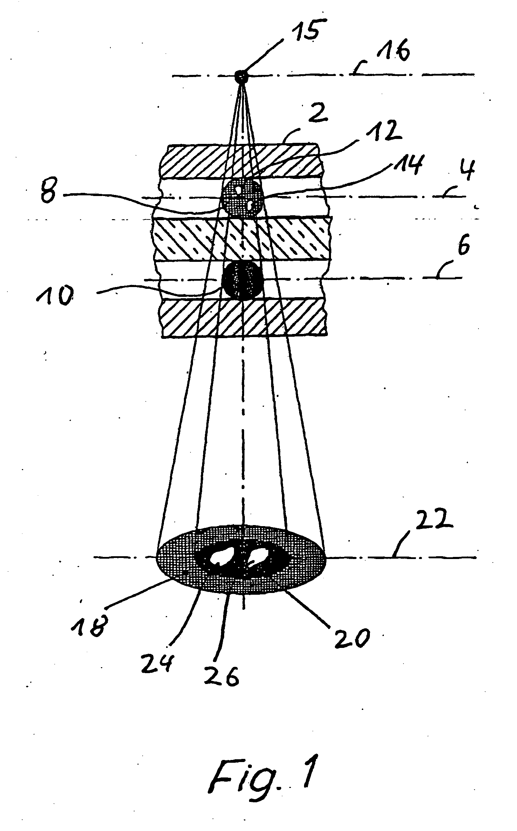

Fig. 1 zeigt eine Mehrschicht-Leiterplatte 2 während einer Untersuchung mittels Röntgenstrahlung in einem bildgebenden Verfahren. Die Mehrschicht-Leiterplatte 2 weist in unterschiedlichen Ebenen 4, 6 liegende Lötverbindungen in Form von Lotkugeln auf, von denen in Fig. 1 beispielhaft zwei Lotkugeln 8, 10 dargestellt sind, wobei die Lotkugel 8 Defekte in Form von Blasen 12, 14 aufweist.

Zur Untersuchung der Mehrschicht-Leiterplatte 2 wird diese mit Röntgenstrahlung durchstrahlt, die von einer Röntgenstrahlungsquelle erzeugt wird, deren Brennfleck 15 in einer Brennfleckebene 16 liegt. Bei Durchstrahlung der Lotkugeln 8, 10 entstehen Durchstrahlungsbilder 18, 20, die in einer Detektorebene 22 von einem Detektor aufgenommen werden. Hierbei entstehen Durchstrahlungsbilder 24, 26 der Blasen 10, 12.

Wie aus Fig. 1 ersichtlich ist, sind die Durchstrahlungsbilder 18, 20 der Lotkugeln 8, 10 in der Detektorebene 22 überlagert. Daher sind auf dem von dem Detektor aufgenommenen Bild zwar die Durchstrahlungsbilder 24, 26 der Blasen 10, 12 erkennbar, so daß feststellbar ist, daß eine der durchstrahlten Lotkugeln 8, 10 Defekte aufweist. Aufgrund der Überlagerung der Durchstrahlungsbilder 18, 20 ist jedoch nicht feststellbar, in welcher der Lotkugeln 8, 10 sich die Blasen 12, 14 befinden. Das in Fig. 1 veranschaulichte Verfahren ist damit nicht geeignet, Fehler in den Lotkugeln 8, 10 den Ebenen 4, 6 zuzuordnen und damit zu lokalisieren.

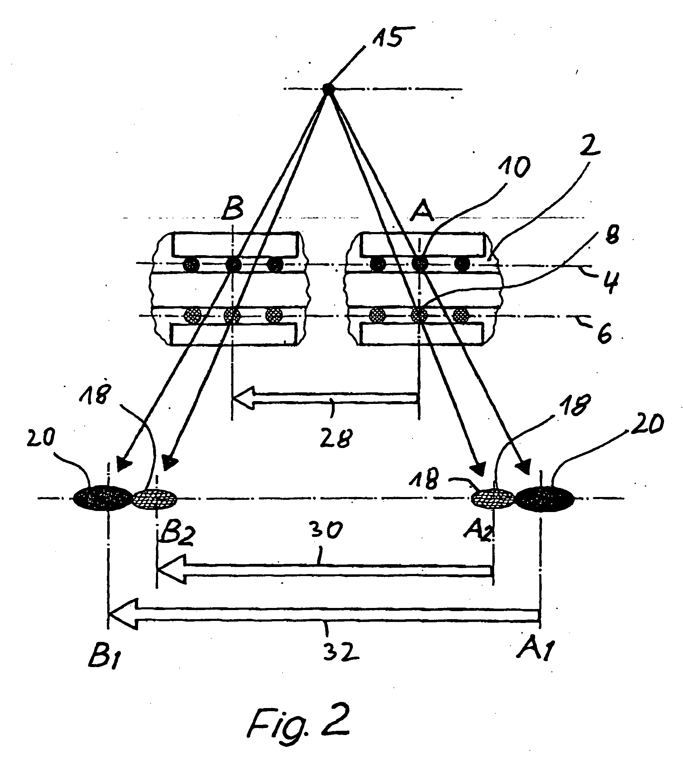

Fig. 2 veranschaulicht ein Tomosynthese-Verfahren gemäß dem Stand der Technik, mittels dessen es möglich ist, Fehler in den Lotkugeln 8, 10 nicht nur festzustellen, sondern auch den Ebenen 4, 6 zuzuordnen und damit zu lokalisieren. Wie in Fig. 2 dargestellt, wird bei einem solchen Verfahren die Mehrschicht-Leiterplatte 2 schräg durchstrahlt, so daß bei entsprechender Wahl des Durchstrahlungswinkels die Durchstrahlungsbilder 18, 20 in der Detektorebene 22 nicht mehr überlagert, sondern zueinander beabstandet sind. Befindet sich die Mehrschicht-Leiterplatte in der Position A, wie in Fig. 2 dargestellt, so entstehen die Durchstrahlungsbilder 18, 20 der Lotkugeln 8, 10 an Positionen A₂ bzw. A₁, wie in Fig. 2 veranschaulicht.

Wird die Mehrschicht-Leiterplatte aus der Position A in die Position B parallel zu der Detektorebene 22 bewegt, wie in Fig. 2 durch einen Pfeil 28 veranschaulicht, so entsteht das Durchstrahlungsbild 18 der Lotkugel 8 nunmehr an einer Position B₂, während das Durchstrahlungsbild 20 der Lotkugel 10 nunmehr an einer Position B₁ entsteht.

Es ist ersichtlich, daß bei der Verschiebung der Mehrschicht-Leiterplatte 2 aus der Position A in die Position B sich das Durchstrahlungsbild 18 der Lotkugel 8 um einen in Fig. 2 durch einen Pfeil 30 symbolisierten kürzeren Weg in der Detektorebene 22 verschoben hat, während sich das Durchstrahlungsbild 20 der Lotkugel 10 um einen in Fig. 2 durch einen Pfeil 32 symbolisierten längeren Weg in der Projektionsebene 22 verschoben hat. Auf diese Weise kann bei Feststellung von Defekten in den Lotkugeln 8, 10 eindeutig zugeordnet werden, in welcher der Ebenen 4, 6 sich eine defekte Lotkugel befindet.

In hierzu entsprechender Weise können durch Veränderung des Durchstrahlungswinkels die anderen in den Ebenen 4, 6 befindlichen Lotkugeln untersucht und festgestellt werden, ob diese einen Defekt aufweisen. Somit können mit dem in Fig. 2 veranschaulichten Verfahren Fehler nicht nur festgestellt, sondern exakt lokalisiert werden. In Fig. 2 ist das bekannte Verfahren für eine dreischichtige Leiterplatte dargestellt. Es ist unter Beibehaltung des Grundprinzips selbstverständlich auch bei einer Untersuchung von Leiterplatten mit mehr als zwei Schichten verwendbar.

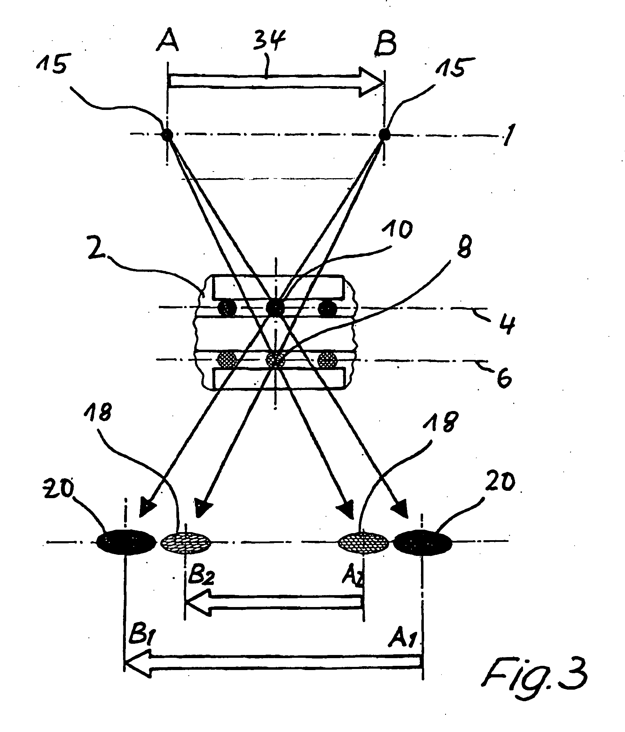

Fig. 3 veranschaulicht ein alternatives Tomosynthese-Verfahren gemäß dem Stand der Technik, das sich von dem in Fig. 2 veranschaulichten Verfahren dadurch unterscheidet, daß die Mehrschicht-Leiterplatte 2 während der Untersuchung ortsfest bleibt. Eine Veränderung des Durchstrahlungswinkels, die für eine Erzeugung der Durchstrahlungsbilder 18, 20 an den Positionen A₁ und A₂ einerseits und den Positionen B₁, B₂ andererseits erforderlich ist, wird bei dem in Fig. 3 veranschaulichten Verfahren dadurch erzielt, daß die Röntgenstrahlungsquelle und damit der Brennfleck 15 in der Brennfleckebene 16 bewegt wird, wie in Fig. 3 durch einen Pfeil 34 symbolisiert.

Die in den Fig. 2 und 3 veranschaulichten Tomosynthese-Verfahren gemäß dem Stand der Technik haben den Nachteil, daß während der Untersuchung entweder die Mehrschicht-Leiterplatte 2 (vgl. Fig. 2) oder die Röntgenstrahlungsquelle (vgl. Fig. 3) bewegt werden muß. Um Durchstrahlungsbilder mit einer für die Lokalisierung von Fehlern erforderlichen Genauigkeit zu erhalten, muß diese Bewegung mit hoher Präzision erfolgen. Dies insbesondere deshalb, weil es sich bei den zu untersuchenden Proben beispielsweise um hochminiaturisierte Mehrschicht-Leiterplatten handeln kann. Die erforderliche Präzision bei der Bewegung erfordert einen hochpräzisen und damit aufwendigen und teuren mechanischen Aufbau bekannter Tomosynthese-Vorrichtungen. Ein weiterer Nachteil der bekannten Vorrichtungen besteht darin, daß die Untersuchung von Proben zeitaufwendig ist, weil jede Positionierung der Röntgenstrahlungsquelle bzw. der Probe Zeit in Anspruch nimmt und eine Vielzahl derartiger Positionierungen durchgeführt werden muß.

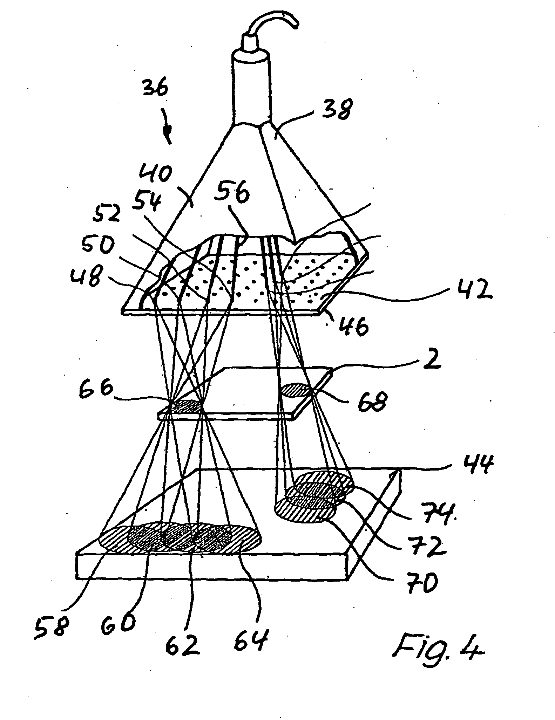

In Fig. 4 ist ein Ausführungsbeispiel einer erfindungsgemäßen Vorrichtung 36 dargestellt, die eine Röntgenröhre 38 aufweist, die ein bei Betrieb der Vorrichtung 36 evakuierbares Gehäuse 40 aufweist, in dessen Innerem eine in Fig. 4 nicht erkennbare Teilchenquelle zur Erzeugung eines Teilchenstrahles elektrisch geladener Teilchen aufgenommen ist. Die Teilchenquelle ist bei diesem Ausführungsbeispiel durch ein Filament gebildet, aus dem Elektronen austreten und einen Elektronenstrahl bilden, der in bekannter Weise beispielsweise mittels einer Lochanode in Richtung auf ein Target 42 beschleunigt wird. Beim Auftreffen der hochenergetisch beschleunigten Elektronen auf das Target 42 entsteht Röntgenstrahlung, die zur Durchstrahlung der Mehrschicht-Leiterplatte 2 in einem Tomosynthese-Verfahren verwendet wird. Die Art und Weise der Erzeugung von Röntgenstrahlung ist allgemein bekannt und wird daher hier nicht näher erläutert.

Die in Fig. 4 dargestellte Vorrichtung 36 weist ferner eine Halterung für die Mehrschicht-Leiterplatte 2 sowie einen röntgensensitiven Detektor 44 auf. Bei dem in Fig. 4 dargestellten Ausführungsbeispiel ist die Fläche des Targets 42 größer als die Fläche der zu untersuchenden Mehrschicht-Leiterplatte 2. Erfindungsgemäß ist es zweckmäßig, wenn die Fläche des Targets 42 mindestens so groß ist wie die zu untersuchende Fläche der Mehrschicht-Leiterplatte 2, die nachfolgend auch kurz als Probe bezeichnet wird.

Die Eingangs-Bildfläche des Detektors 44 ist bei diesem Ausführungsbeispiel größer als die Fläche der zu untersuchenden Probe 2 gewählt. Im einzelnen ist die Eingangs-Bildfläche des Detektors 44 so groß gewählt, daß in Abhängigkeit von dem in Strahlrichtung gemessenen Abstand der Probe 2 zu dem Target 42 und der sich daraus ergebenden Vergrößerung bei allen denkbaren Durchstrahlungswinkeln der Probe 2 mittels der von der Röntgenröhre 38 erzeugten Röntgenstrahlung die erzeugten Durchstrahlungsbilder stets innerhalb der Begrenzungen der Eingangs-Bildfläche des Detektors 44 liegen.

Erfindungsgemäß weist das Target 42 ein Trägerelement 46 auf, an dem eine Mehrzahl von zueinander beabstandeten, das Trägerelement 46 jeweils nur teilweise bedeckenden Targetelementen angeordnet ist, die bei diesem Ausführungsbeispiel rasterartig auf dem Trägerelement 64 angeordnet sind. In Fig. 4 sind aus der Mehrzahl von Targetelementen lediglich vier Targetelemente mit den Bezugszeichen 48, 50, 52, 54 bezeichnet.

Wird der Elektronenstrahl 56 zeitlich aufeinanderfolgend auf die Targetelemente 54, 52, 50, 48 gerichtet, so emittieren diese Röntgenstrahlung, und es entstehen in der Eingangs-Bildebene des Detektors 44 entsprechend den durch den jeweiligen Einfallswinkel des Elektronenstrahles 56 auf das Target 42 definierten unterschiedlichen Durchstrahlungswinkeln Durchstrahlungsbilder 58, 60, 62, 64 eines Bereiches 66 der Probe 2.

Zur Veranschaulichung ist in Fig. 4 dargestellt, daß bei Durchstrahlung eines anderen Bereiches 68 der Probe 2 unter unterschiedlichen Durchstrahlungwinkeln Durchstrahlungsbilder 70, 72, 74 entstehen.

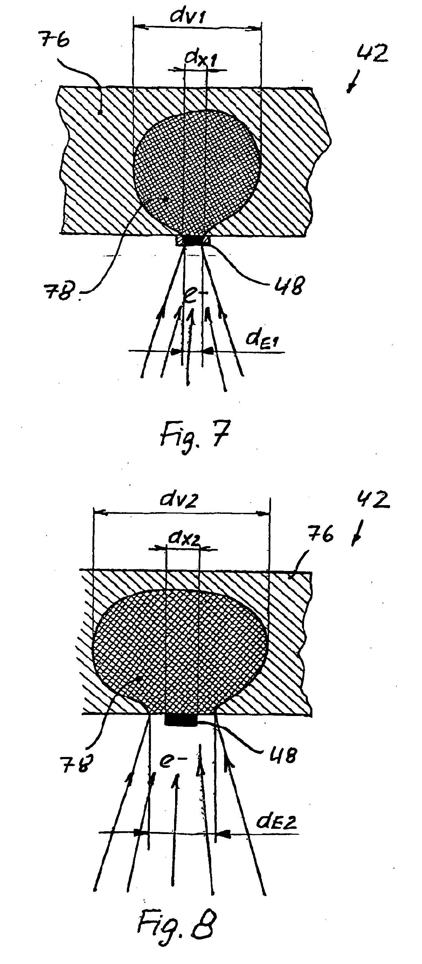

Aus Gründen der Veranschaulichung ist der Elektronenstrahl 56 in Fig. 4 gleichzeitig in mehreren Positionen dargestellt, in denen er unterschiedliche der Targetelemente 48 bis 54 bestrahlt. Tatsächlich bestrahlt der Elektronenstrahl 56 jedoch bei diesem Ausführungsbeispiel gleichzeitig jeweils nur eines der Targetelemente 48-54 und der weiteren Targetelemente. Trifft der Elektronenstrahl 56 auf eines der Targetelemente auf, so erzeugt dieses in weiter unten anhand der Fig. 7 ff. näher beschriebenen Weise Röntgenstrahlung, mittels derer die Probe 2 durchstrahlt wird.

Um den Teilchenstrahl wahlweise auf die einzelnen Targetelemente des Targets 42 zu richten, sind erfindungsgemäß Ablenkmittel vorgesehen, durch die der Elektronenstrahl 56 zum Auftreffen auf die Targetelemente ablenkbar ist. Die Ablenkmittel weisen bei dem in Fig. 4 dargestellten Ausführungsbeispiel eine Spulenanordnung auf, mittels derer der Elektronenstrahl 56 so ablenkbar ist, daß er auf jedes der Targetelemente des Targets 44 auftreffen kann. Wird als Strahlrichtung des Elektronenstrahls 56 beispielsweise die Z-Richtung angenommen, so ist der Elektronenstrahl 56 mittels der Spulenanordnung sowohl in X- als auch in Y-Richtung, also zweidimensional ablenkbar. Aufbau und Funktionsweise derartiger Spulenanordnungen sind dem Fachmann allgemein bekannt und werden daher hier nicht näher erläutert.

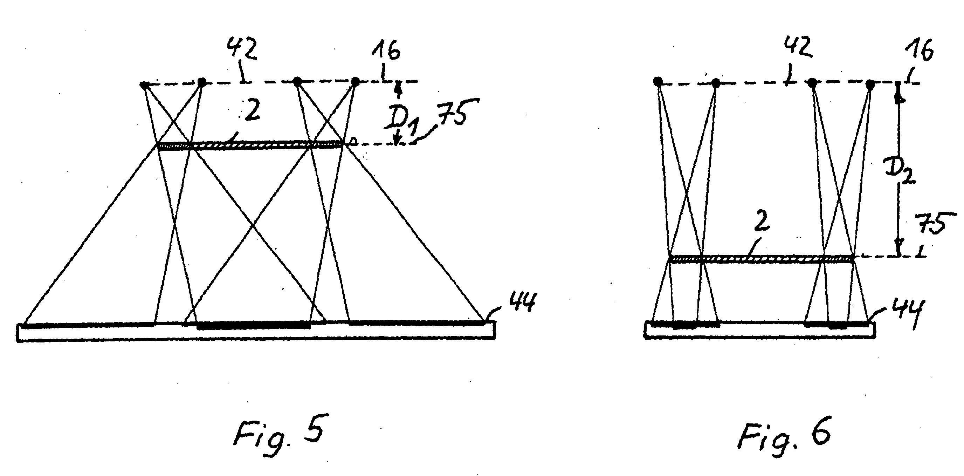

Die Figuren 5 und 6 dienen zur Verdeutlichung der Dimensionierung der Eingangs-Bildfläche des Detektors 44. Fig. 5 verdeutlicht die strahlengeometrischen Verhältnisse bei einem Abstand D₁ zwischen der Brennfleckebene 16 und einer Ebene 75, in der sich die Probe, findet. Demgegenüber verdeutlicht Fig. 6 die strahlengeometrischen Verhältnisse, die sich bei einem größeren Abstand D₂ zwischen der Brennfleckebene 16 und der Ebene 75 ergeben. Mit der Anordnung gemäß Fig. 5 wird eine höhere Vergrößerung erzielt als mit der Anordnung gemäß Fig. 6, wobei ersichtlich ist, daß bei dieser höheren Vergrößerung eine größere Eingangs-Bildfläche des Detektors 44 erforderlich ist.

Fig. 7 zeigt eine schematische Schnittansicht durch das Target 44 im Bereich eines Targetelementes 48. Das Target 44 weist ein aus einem Trägermaterial bestehendes Trägerelement 76 auf, an dem das aus einem Targetmaterial bestehende Targetelement 48 sowie die weiteren, in Fig. 7 nicht erkennbaren Targetelemente angeordnet sind, die beim Richten des Elektronenstrahls 56 auf das jeweilige Targetelement Röntgenstrahlung emittieren. Das Trägerelement 76 besteht prinzipiell aus einem Trägermaterial geringer Dichte und hoher Wärmeleitfähigkeit. Bei dem vorliegenden Ausführungsbeispiel ist das Trägermaterial Diamant, dessen Wärmeleitkoeffizient ≥ 20 W/(cm x K) ist.

Bei diesem Ausführungsbeispiel ist das Trägermaterial zur Erhöhung der elektrischen Leitfähigkeit dotiert, bei dem vorliegenden Ausführungsbeispiel mit einer Bor-Dotierung. Dadurch, daß das für sich genommen elektrisch isolierende Trägermaterial mittels der Dotierung elektrisch leitfähig gemacht ist, können elektrische Ladungen von dem Trägerelement 76 abfließen, so daß eine elektrische Aufladung des Trägerelementes 46 und damit des Targets 44 vermieden ist.

Das Targetelement 48 besteht aus einem Material hoher Dichte, bei dem vorliegenden Ausführungsbeispiel Wolfram, das bei Beschuß mit elektrisch geladenen Teilchen, insbesondere Elektronen, Röntgenstrahlung emittiert. Nachfolgend wird ausschließlich auf das Targetelement 48 Bezug genommen; die weiteren Targetelemente sind entsprechend aufgebaut.

Aus Fig. 7 ist nicht ersichtlich und deshalb wird hier erläutert, daß das Targetelement 48 in der Draufsicht im wesentlichen kreisförmig begrenzt ist. Der Durchmeser des Targetelementes 48, der, wie weiter unten näher erläutert wird, den Durchmesser des Brennflecks der Röntgenröhre 38 definiert, ist entsprechend der gewünschten Auflösung der durch Durchstrahlung der Probe 2 erzielten und von dem Detektor 44 aufgenommenen Bilder gewählt. Das Targetelement 48 kann beispielsweise eine mittels eines Mikrostrukturierungsverfahrens auf dem Trägerelement 4 gebildete Mikro- oder Nanostruktur sein, deren Durchmesser ausschließlich von der Genauigkeit des verwendeten Mikrostrukturierungsverfahrens abhängig ist und s etwa 1.000 nm betragen kann.

Bei Bestrahlung des Targetelementes 48 mit Elektronen beim Richten des Elektronenstrahles 56 auf das Targetelement 48 werden die Elektronen in dem Targetelement 48 auf sehr kurzem Wege abgebremst, wobei kurzwellige Röntgenstrahlung entsteht. In dem Trägermaterial geringerer Dichte des Trägerelementes 76 werden eindringende Elektronen dagegen auf sehr langen Wegen gebremst, wobei mehr langwellige Strahlung entsteht. In Fig. 7 ist ein Fall dargestellt, in dem der Elektronenstrahl mit einem Durchmesser d_{E1} auf das Targetelement 48 auftrifft, wobei der Durchmesser d_{E1} in diesem Fall kleiner als der Durchmesser des Targetelementes 48 ist. Die Abbremsung der Elektronen in dem Targetelement 48 führt zu einer kurzwelligen Röntgenstrahlung mit einem Quellendurchmesser d_{X1}, der ≤ dem Durchmesser des Targetelementes 48 ist. Die durch das Targetelement 48 hindurch in das weniger dichte Trägermaterial des Trägerelementes 76 eintretenden Elektronen werden auf sehr langen Wegen innerhalb des Bremsvolumens 78 innerhalb des Trägerelementes 76 abgebremst und führen zu überwiegend langwelliger Strahlung, die mit geeigneten Filtern zurückgehalten werden kann, so daß nur der kürzerwellige Strahlungsanteil wirksam wird, der aus dem Targetelement 48 stammt, das erfindungsgemäß die Fläche des Trägerelementes 76 nur teilweise bedeckt.

In Fig. 8 ist ein Fall dargestellt, in dem der Durchmesser des Querschnitts des Elektronenstrahles d_{E2} deutlich größer ist als der Durchmesser des Targetelementes 48. Auch in diesem Fall entsteht die überwiegend kurzwellige Strahlung in dem definiert begrenzten Targetelement 48 mit dem Durchmesser d_{X2}, während die in das weniger dichte Trägermaterial des Trägerelementes 76 eindringenden Elektronen innerhalb des Bremsvolumens 78 zu mehr langwelliger Strahlung führen, die herausgefiltert werden kann, damit nur die aus dem Targetelement 48 stammende kürzerwellige Röntgenstrahlung einer definierten Wellenlänge oder in einem definierten Wellenlängenbereich zur Durchstrahlung der Probe 2 wirksam wird.

Aus einem Vergleich der Figuren 7 und 8 ist ersichtlich, daß Form, Größe und Ort des Brennflecks der Röntgenröhre 48 ausschließlich von Form, Größe und Ort des Targetelementes 48 bzw. eines der anderen Targetelemente, auf die der Elektronenstrahl 56 gerichtet ist, abhängig sind, und nicht von Form, Größe und Ort des Querschnitts des Elektronenstrahles.

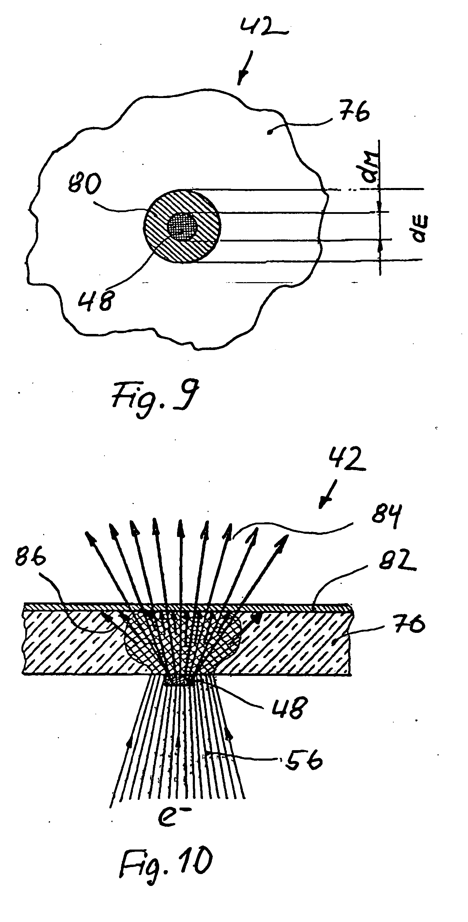

Fig. 9 zeigt eine Ansicht auf das Target gemäß Fig. 8, wobei ersichtlich ist, daß der Durchmesser d_{E} und damit der Querschnitt 80 des Elektronenstrahles 56 größer ist als der Durchmesser d_{M} und damit der Querschnitt des Targetelementes 48. Wie anhand der Figuren 7 und 8 erläutert, ist für den Querschnitt des Brennflecks der Röntgenröhre 38 jedoch ausschließlich der Querschnitt des Targetelementes 48 senkrecht zur Oberfläche des Targets 42 maßgeblich.

In Fig. 10 ist eine alternative Ausführungsform eines als Transmissionstarget ausgebildeten Targets 42 der erfindungsgemäßen Vorrichtung 36 dargestellt, das sich von den Ausführungsbeispielen gemäß Fig. 7 und Fig. 8 dadurch unterscheidet, daß das Trägerelement 76 auf seiner dem Targetelement 48 abgewandten Seite ein Strahlenfilter 82 aufweist, das für in dem Targetelement 48 erzeugte Röntgenstrahlung 84 durchlässig ist, in dem Trägerelement 76 erzeugte Röntgenstrahlung 86 jedoch weitgehend absorbiert. Das Strahlenfilter 82 kann beispielsweise durch eine Aluminiumfolie gebildet sein.

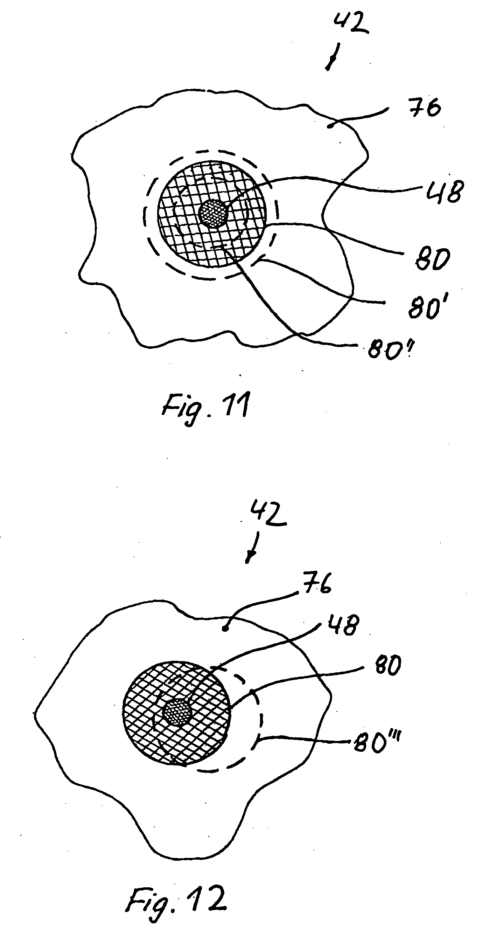

In Fig. 11 ist mit dem Bezugszeichen 80 ein voreingestellter Querschnitt des Elektronenstrahles 56 bezeichnet, während mit dem Bezugszeichen 80' ein aufgrund von Störeinflüssen vergrößerter Querschnitt und mit dem Bezugszeichen 80'' ein aufgrund von Störeinflüssen verkleinerter Querschnitt des Elektronenstrahles 56 bezeichnet ist. Da der Querschnitt des Brennflecks der Röntgenröhre 38 ausschließlich von dem Querschnitt des Targetelementes 48 abhängig und dieser konstant ist, haben entsprechende Schwankungen des Querschnitts des Elektronenstrahles 56 keine Auswirkungen auf den Querschnitt des Brennflecks, solange das Targetelement 48 von dem Elektronenstrahl 56 vollflächig bestrahlt wird.

Wie aus Fig. 12 ersichtlich ist, gilt entsprechendes auch bei einer seitlichen Verschiebung des Elektronenstrahles 56 quer zu seiner Strahlachse in eine Position 80"', da auch in dieser Position des Elektronenstrahles 56 das Targetelement 48 noch vollflächig von dem Elektronenstrahl 56 erfaßt ist.

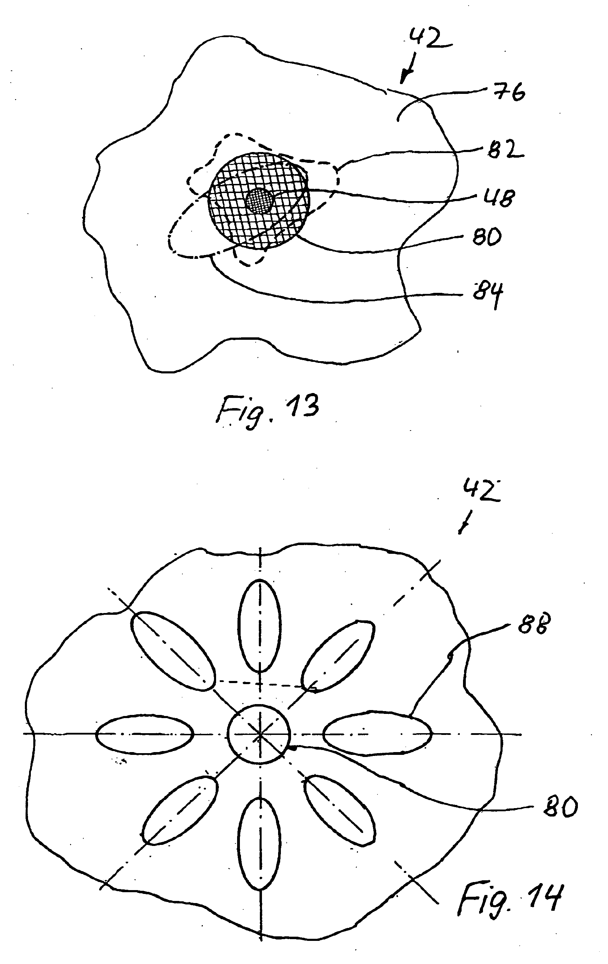

Wie aus Fig. 13 ersichtlich ist, sind auch Veränderungen des Querschnitts des Elektronenstrahles 56 ohne Auswirkungen auf den Querschitt des Brennflecks, solange auch nach einer Querschnittsveränderung des Elektronenstrahles 56 das Targetelement 48 noch vollflächig bestrahlt wird. Lediglich beispielshalber sind in Fig. 13 zwei verzerrte Querschnitte des Elektronenstrahles mit den Bezugszeichen 82 und 84 bezeichnet. Da der Querschnitt des Brennflecks der Röntgenröhre 38 ausschließlich von dem Querschnitt des Targetelementes 48 abhängig und dieser konstant und ortsstabil ist, führen Querschnittsveränderungen des Elektronenstrahles 56 nicht zu einer Verschlechterung der Röntgenbildqualität der erfindungsgemäßen Vorrichtung 36.

Wie sich aus einer Zusammenschau der Figuren 11 bis 13 ergibt, bleiben Querschnittsveränderungen und Verschiebungen des Elektronenstrahles 56 ohne Auswirkung auf den Querschnitt und Ort des Brennflecks. Dementsprechend kann in der Röntgenröhre 48 auf konstruktiv aufwendige Maßnahmen verzichtet werden, mit denen in herkömmlichen Röntgenröhren, die in bildgebenden Verfahren verwendet werden, Form, Größe und Auftreffpunkt des Elektronenstrahles auf das Target stabilisiert werden müssen, um eine ausreichende Bildqualität zu erzielen.

Fig. 14 stellt überhöht Verzerrungen des Querschnitts des Elektronenstrahles 56 dar, die bei unterschiedlichen Auftreffwinkeln des Elektronenstrahles 56 auf das Target 42 entstehen. Mit dem Bezugszeichen 80 ist der auf dem Target 42 wirksame Querschnitt des Elektronenstrahles 56 dargestellt, wenn dieser unter einem Winkel von 90° auf das Target 42 auftrifft. Trifft demgegenüber der Elektronenstrahl 56 unter einem von 90° abweichenden Winkel auf das Target 42 auf, so ist der wirksame Querschnitt ellipsenförmig verzerrt. Fig. 14 stellt entsprechende ellipsenförmig verzerrte Querschnitte in verschiedenen Ablenkungsposisitonen des Elektronenstrahles 56, die unterschiedlichen Durchstrahlungswinkeln entsprechen, dar, wobei der Übersichtlichkeit halber nur einer der verzerrten Querschnitte mit dem Bezugszeichen 88 versehen ist. Bei einer herkömmlichen Röntgenröhre würden entsprechend verzerrte Querschnitte 88 des Elektronenstrahles zu einer verzerrten Geometrie des Brennflecks der Röntgenröhre führen, die die Bildqualität deutlich verschlechtern.

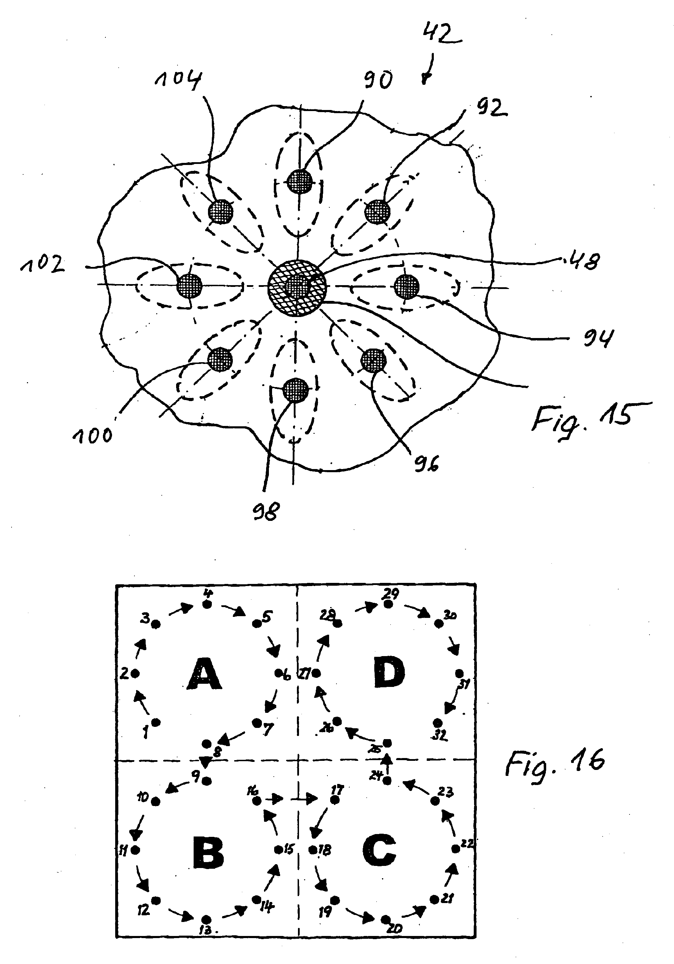

Fig. 15 veranschaulicht die sich insoweit bei einem erfindungsgemäßen Target 42 ergebenden Verhältnisse, wobei neben dem Targetelement 48 lediglich beispielshalber Targetelemente 92, 94, 96, 98, 100, 102 und 104 dargestellt sind. Es ist ersichtlich, daß die Targetelemente 48 und 92 bis 104 jeweils in der Draufsicht auf das Target 42 die gleiche, bei dem dargestellten Ausführungsbeispiel kreisförmig begrenzte Kontur aufweisen. Wie aus Fig. 15 ferner ersichtlich ist, ist der Querschnitt der Targetelemente 48 und 92 bis 104 jeweils kleiner als der verzerrte bzw. unverzerrte Querschnitt des Elektronenstrahles 56, so daß in der jeweiligen Ablenkposition des Elektronenstrahles 56 das jeweilige der Targetelemente 48 bzw. 92 bis 104 vollflächig bestrahlt wird. Da Form, Größe und Ort des jeweiligen Brennflecks, wie oben erläutert, ausschließlich von Form, Größe und Ort des jeweils bestrahlten Targetelementes 48 bzw. 90 bis 104 abhängig sind, ergibt sich jeweils ein ideal kreisförmiger Brennfleck. Auf diese Weise ergibt sich bei der erfindungsgemäßen Vorrichtung 36 auch bei den prinzipbedingt wünschenswerten großen Ablenkungswinkeln des Elektronenstrahles 46 eine hohe Präzision hinsichtlich Form, Größe und Ort des Brennflecks und damit eine besonders hohe Bildqualität.

Die Funktionsweise der erfindungsgemäßen Vorrichtung 36 ist wie folgt:

Zur Untersuchung der Probe 2 wird diese mittels der Halterung in einem entsprechend der gewünschten Vergrößerung gewählten Abstand zu dem Target 42 der Röntgenröhre gehalten. Während der Untersuchung der Probe 2 sind die Röntgenröhre 38, die Probe 2 und der Detektor 44 relativ zueinander ortsfest angeordnet.

Soll beispielsweise der Bereich 66 der Probe 2 untersucht werden, so wird Elektronenstrahl 56 mittels der Ablenkmittel zunächst auf das Targetelement 54 gerichtet, so daß beim Auftreffen der Elektronen auf das Targetelement 54 in der oben beschriebenen Weise Röntgenstrahlung erzeugt wird, mittels derer der Bereich 66 durchstrahlt wird, so daß das Durchstrahlungsbild 58 erzeugt und von dem Detektor 44 aufgenommen wird. Um die in einem Tomosynthese-Verfahren erforderlichen unterschiedlichen Durchstrahlungswinkel zu erzielen (vgl. Fig. 3) wird der Elektronenstrahl 56 durch die Ablenkmittel so abgelenkt, daß er nachfolgend beispielsweise auf die Targetelemente 52, 50, 48 auftrifft, so daß die Durchstrahlungsbilder 60, 62, 64 entstehen.

Da erfindungsgemäß der Ort der Röntgenstrahlungsquelle relativ zu der Probe 2 ausschließlich dadurch verändert wird, daß der Elektronenstrahl 56 auf unterschiedliche Targetelemente gerichtet wird, sind somit erfindungsgemäß die erforderlichen unterschiedlichen Durchstrahlungswinkel ohne jegliche mechanische Bewegung der Röntgenstrahlungsquelle, der Probe 2 und des Detektors 44 erzielbar. Da die Ablenkung des Elektronenstrahles 56 mittels der Spulenanordnung und damit der Übergang von einem Targetelement auf ein anderes Targetelement quasi zeitverzögerungsfrei erfolgen kann, kann die Probe 2 mit äußerst hoher und mit bekannten Tomosynthese-Vorrichtungen nicht erreichbarer Geschwindigkeit untersucht werden. Da ferner die erforderlichen unterschiedlichen Durchstrahlungswinkel erzielt werden können, ohne massebehaftete Bauteile zu bewegen, ist die erfindungsgemäße Vorrichtung 36 darüber hinaus besonders einfach im Aufbau und damit besonders kostengünstig sowie robust.

Die Auswertung der von dem Detektor 44 aufgenommenen Durchstrahlungsbilder erfolgt in dem Fachmann allgemein bekannter Weise mittels Algorithmen der Computer-Tomosynthese und Bildverarbeitung und wird daher hier nicht näher erläutert.

Erfindungsgemäß wird somit der Brennfleck der Röntgenröhre 38 durch Richten des Elektronenstrahles auf eines der Targetelemente positioniert. In Fig. 16 sind entsprechende Brennfleck-Positionierungs-Sequenzen für eine in vier Abschnitte A, B, C und D unterteilte Probe 2 dargestellt. Aus Fig. 16 ist ersichtlich, daß bei dem dargestellten Ausführungsbeispiel der Brennfleck jeweils entlang einer Kreisbahn positioniert wird.

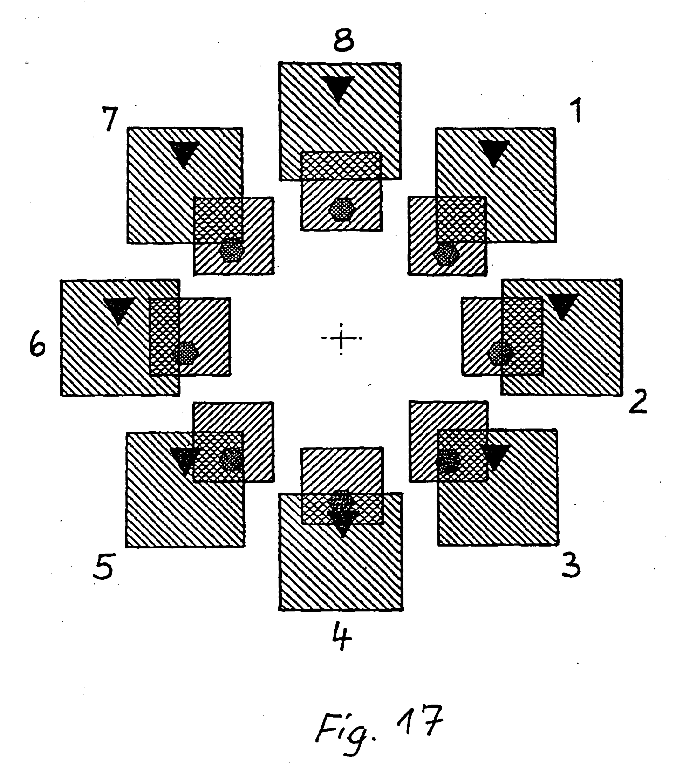

Fig. 17 veranschaulicht eine Röntgenbild-Sequenz, wie sie sich bei einer Brennfleck-Positionierungs-Sequenz gemäß Fig. 16 in Bezug auf den Abschnitt A der Probe 2 ergibt. Mit einem auf dem Kopf stehenden schwarzen Dreieck ist in Fig. 17 ein Detail in einer brennfleck-nahen Ebene der Probe dargestellt, während mit einem grauen Sechseck ein Detail in einer brennfleck-fernen Ebene der Probe 2 dargestellt ist. Eine Auswertung der so aufgenommenen Durchstrahlungsbilder ermöglicht in der oben anhand von Fig. 2 beschriebenen Weise mit Hilfe von Algorithmen der Tomosynthese und Bildverarbeitung eine Lokalisierung von Fehlern in der Probe 2.

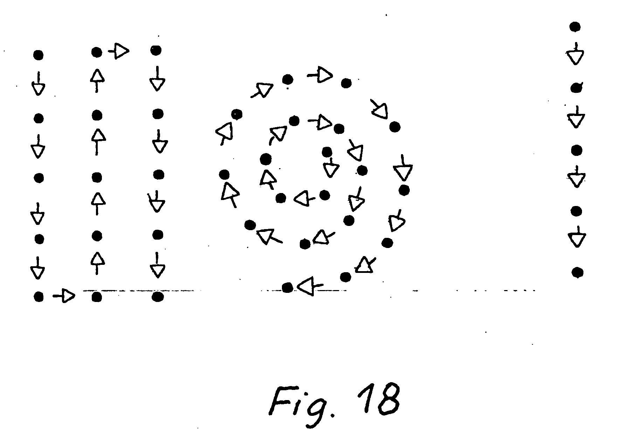

Fig. 18 stellt lediglich beispielhaft alternative Brenfleck-Positionierungssequenzen dar. Hierbei ist in Fig. 18 links eine mäanderförmige Positionierung, in Fig. 18 in der Mitte eine spiralförmige Positionierung und in Fig. 18 rechts eine linienförmige Positionierung des Brennflecks dargestellt.

## Patentansprüche

1. Röntgen-Tomosynthese-Vorrichtung (36),
mit Mitteln zum Richten eines Teilchenstrahles elektrisch geladener Teilchen auf ein Target (42), das beim Auftreffen der elektrisch geladenen Teilchen auf das Target (42) Röntgenstrahlung zum Durchstrahlen einer zu untersuchenden Probe (2) emittiert und
mit einem röntgensensitiven Detektor (44) zur Aufnahme von unter unterschiedlichen Durchstrahlungswinkeln aufgenommenen Durchstrahlungsbildern (58, 60, 62, 64, 70, 72, 74)
und mit einem Computer, der eingerichtet ist, diese Durchstrahlungsbilder mittels Algorithmen der Computer-Tomosynthese auszuwerten,
**dadurch gekennzeichnet,**
**dass** das Target (42) wenigstens ein Trägerelement (46) aufweist, an dem eine Mehrzahl von zueinander beabstandeten, das Trägerelement (46) jeweils nur teilweise bedeckenden Targetelementen (48 - 54) angeordnet ist, und
**dass** Ablenkmittel vorgesehen sind, durch die der Teilchenstrahl zum Auftreffen auf die Targetelemente (48 - 54) ablenkbar ist.

2. Vorrichtung nach Anspruch 1, **dadurch gekennzeichnet, daß** die Ablenkmittel wenigstens eine Spule oder Spulenanordnung und/oder wenigstens eine elektrostatische Ablenkvorrichtung aufweisen.

3. Vorrichtung nach Anspruch 1 oder 2, **dadurch gekennzeichnet, daß** eine Teilchenquelle zur Erzeugung des Teilchenstrahles relativ zu einem Detektor (44) zur Detektion der Röntgenstrahlung nach Untersuchung der Probe (2) zumindest während der Durchstrahlung der Probe ortsfest angeordnet ist.

4. Vorrichtung nach einem der vorhergehenden Ansprüche, **dadurch gekennzeichnet, daß** eine Halterung für die zu untersuchende Probe (2) relativ zu der Teilchenquelle und/oder dem Detektor (44) zumindest während der Untersuchung der Probe ortsfest angeordnet ist.

5. Vorrichtung nach einem der vorhergehenden Ansprüche, **dadurch gekennzeichnet, daß** die Targetelemente (48-54) in -der- Draufsicht auf das Target (42) im wesentlichen die gleiche Kontur aufweisen.

6. Vorrichtung nach einem der vorhergehenden Ansprüche, **dadurch gekennzeichnet, daß** die Targetelemente (48-54) in der Draufsicht auf das Target im wesentlichen kreisförmig begrenzt sind.

7. Vorrichtung nach einem der vorhergehenden Ansprüche, **dadurch gekennzeichnet, daß** das Target (42) als Transmissionstarget ausgebildet ist.

8. Vorrichtung nach einem der vorhergehenden Ansprüche, **dadurch gekennzeichnet, daß** der Querschnitt des Teilchenstrahles derart größer als der jeweilige Querschnitt der Targetelemente (48-54) gewählt ist, daß der Teilchenstrahl beim Richten auf ein Targetelement (48-54) dasselbe stets vollflächig bestrahlt.

9. Vorrichtung nach einem der vorhergehenden Ansprüche, **dadurch gekennzeichnet, daß** Steuerungsmittel vorgesehen sind, durch die die Ablenkmittel derart ansteuerbar sind, daß der Teilchenstrahl in einer vorgegebenen oder vorgebbaren Reihenfolge einzelne oder sämtliche der Targetelemente (48-54) bestrahlt, derart, daß die bestrahlten Targetelemente (48-54) entsprechend der vorgegebenen oder vorgebbaren Reihenfolge Röntgenstrahlung emittieren.

10. Vorrichtung nach Anspruch 9, **dadurch gekennzeichnet, daß** die Steuerungsmittel die Ablenkmittel derart ansteuern, daß der Teilchenstrahl jeweils nur eines der Targetelemente (48-54) bestrahlt.

11. Vorrichtung nach Anspruch 9, **dadurch gekennzeichnet, daß** die Steuerungsmittel die Ablenkmittel derart ansteuern, daß gleichzeitig wenigstens zwei Targetelemente (48-54) durch einen Teilchenstrahl bestrahlt werden.

12. Vorrichtung nach einem der vorhergehenden Ansprüche, **dadurch gekennzeichnet, daß** das Trägerelement (46) wenigstens teilweise aus einem Trägermaterial besteht, dessen Wärmeleitkoeffizient ≥ 10 W/(cm x K), vorzugsweise ≥ 20 W/(cm x K) ist.

13. Vorrichtung nach einem der vorhergehenden Ansprüche, **dadurch gekennzeichnet, daß** das Trägermaterial Diamant ist oder Diamant enthält.

14. Vorrichtung nach einem der vorhergehenden Ansprüche, **dadurch gekennzeichnet, daß** das Trägermaterial zur Erhöhung der elektrischen Leitfähigkeit dotiert ist.

15. Vorrichtung nach einem der vorhergehenden Ansprüche, **dadurch gekennzeichnet, daß** das Target ein Filter (82) aufweist, das für in den Targetelementen (48-54) erzeugte Röntgenstrahlung durchlässig ist und in dem Trägerelement (46) erzeugte Röntgenstrahlung wenigstens teilweise sperrt.

## Claims

1. X-ray tomosynthesis device (36), comprising:
a device configured for directing a particle beam of electrically charged particles onto a target (42) which emits X-ray radiation for irradiating a sample (2) to be examined when the electrically charged particles strike the target (42), and
an X-ray radiation-sensitive detector (44) being configured for recording irradiation images (58, 60, 62, 64, 70, 72, 74) recorded at different radiation angles and a computer capable to evaluate the irradiation images via computer-tomosynthesis algorithms, **characterized in that**
the target (42) including at least one support element (46) on which a plurality of mutually spaced target
elements (48-54) are provided, and each mutually spaced target element only partially covering the at least one support element(46); and
deflection devices are provided for causing the particle beam to be deflected in order to strike the target elements (48-54).

2. Device according to claim 1, **characterized in that** the deflection devices include at least one coil or a coil system, and/or at least one electrostatic deflection device.

3. Device according to claim 1 or 2, **characterized in that** a particle source for generating the particle beam is stationarily mounted relative to a detector (44) for detecting the X-ray radiation after examination of the sample (2) at least during the irradiation of the sample.

4. Device according to one of the preceding claims,
**characterized in that**
a holder for the sample (2) to be examined is stationarily mounted relative to one of the particle source and/or the detector (44), at least during the examination of the sample.

5. Device according to one of the preceding claims,
**characterized in that**
the target elements (48-54) have substantially the same contour in a view of the target from above.

6. Device according to one of the preceding claims,
**characterized in that**
the target elements (48-54) are substantially circular in a view of the target from above.

7. Device according to one of the preceding claims,
**characterized in that**
the target (42) is configured as a transmission target.

8. Device according to one of the preceding claims,
**characterized in that**
the cross section of the particle beam is configured to be larger than the respective cross section of the target elements (48-54), so that the particle beam when directed onto a target element (48-54) consistently irradiates the entire surface thereof.

9. Device according to one of the preceding claims,
**characterized in that**
control devices are provided by which the deflection devices may be actuated in such a way that the particle beam irradiates the target elements (48-54) one of individually or collectively in a predetermined or a predeterminable sequence, so that the irradiated target elements (48-54) emit X-ray radiation according to the respective predetermined or predeterminable sequence.

10. Device according to claim 9, **characterized in that** the control devices control the deflection devices in such a way that the particle beam irradiates only one of the target elements (48-54) at a time.

11. Device according to claim 9, **characterized in that** the control devices control the deflection devices in such a way that at least two target elements (48-54) are simultaneously irradiated by the particle beam.

12. Device according to one of the preceding claims,
**characterized in that**
the support element (46) is at least partially made of a support material having a coefficient of thermal conductivity ≥ 10 W/(cm x K), preferably ≥ 20 W/(cm x K).

13. Device according to one of the preceding claims,
**characterized in that**
the support material is one of diamond or contains diamond.

14. Device according to one of the preceding claims,
**characterized in that**
the support material is doped to increase the electrical conductivity.

15. Device according to one of the preceding claims,
**characterized in that**
the target includes a filter (82) which is permeable to the X-ray radiation generated in the target elements (48-54), and the filter at least partially blocks X-ray radiation generated in the support element (46).

## Revendications

1. Dispositif de tomosynthèse aux rayons X (36),
avec des moyens de direction d'un faisceau de particules composé de particules électriquement chargées sur une cible (42) qui émet lors de l'incidence des particules électriquement chargées sur la cible (42) un rayonnement X pour radiographier un échantillon (2) à examiner ; et avec un détecteur (44) sensible aux rayons X pour prendre des radiographies (58, 60, 62, 64, 70, 72, 74) prises selon différents angles de rayonnement ;
et avec un ordinateur organisé pour analyser ces radiographies à l'aide d'algorithmes de tomosynthèse informatisée,
**caractérisé en ce que :**
la cible (42) comprend au moins un élément de support (46) contre lequel sont disposés une pluralité d'éléments
cibles (48 - 54) espacés les uns par rapport aux autres et ne recouvrant respectivement qu'en partie l'élément de support (46) ; et
des moyens de déviation sont prévus à travers lesquels le faisceau de particules peut être dévié pour percuter les éléments cibles (48 - 54).

2. Dispositif selon la revendication 1, **caractérisé en ce que** les moyens de déviation comportent au moins une bobine ou un agencement de bobine et/ou au moins un dispositif de déviation électrostatique.

3. Dispositif selon la revendication 1 ou 2, **caractérisé en ce qu'**une source de particules destinée à produire le faisceau de particules est disposée fixement sur place par rapport à un détecteur (44), pour détecter le rayonnement X après examen de l'échantillon (2) au moins pendant la radiographie de l'échantillon.

4. Dispositif selon l'une quelconque des revendications précédentes, **caractérisé en ce qu'**un support prévu pour l'échantillon (2) à examiner est disposé fixement sur place par rapport à la source de particules et/ou au détecteur (44) au moins pendant l'examen de l'échantillon.

5. Dispositif selon l'une quelconque des revendications précédentes, **caractérisé en ce que** les éléments cibles (48 - 54) présentent pour l'essentiel le même contour dans la vue en élévation surplombant la cible (42).

6. Dispositif selon l'une quelconque des revendications précédentes, **caractérisé en ce que** les éléments cibles (48 - 54) sont délimités pour l'essentiel en forme de cercle dans la vue en élévation surplombant la cible.

7. Dispositif selon l'une quelconque des revendications précédentes, **caractérisé en ce que** la cible (42) prend la forme d'une cible de transmission.

8. Dispositif selon l'une quelconque des revendications précédentes, **caractérisé en ce que** la section transversale du faisceau de particules est choisie de façon à être plus importante que la section transversale respective des éléments cibles (48 - 54), que le faisceau de particules irradie l'ensemble de la surface d'un élément cible (48 - 54) en cas de direction sur celui-ci.

9. Dispositif selon l'une quelconque des revendications précédentes, **caractérisé en ce que** des moyens de commande sont prévus au moyen desquels les moyens de déviation peuvent être commandés de telle sorte que le faisceau de particules irradie dans une séquence prédéfinie ou prédéfinissable certains éléments cibles (48 - 54) ou l'ensemble d'entre eux, que les éléments cibles (48 - 54) irradiés émettent un rayonnement X en fonction de la séquence prédéfinie ou prédéfinissable.

10. Dispositif selon la revendication 9, **caractérisé en ce que** les moyens de commande commandent de telle sorte les moyens de déviation que le faisceau de particules irradie respectivement un seul des éléments cibles (48 - 54).

11. Dispositif selon la revendication 9, **caractérisé en ce que** les moyens de commande commandent les moyens de déviation de telle sorte qu'au moins deux éléments cibles (48 - 54) sont irradiés simultanément par un faisceau de particules.

12. Dispositif selon l'une quelconque des revendications précédentes, **caractérisé en ce que** l'élément de support (46) se compose au moins en partie d'un matériau de support donc le coefficient de conductivité thermique est ≥ 10 W/(cm x K), de préférence ≥ 20 W/(cm x K).

13. Dispositif selon l'une quelconque des revendications précédentes, **caractérisé en ce que** le matériau de support est un diamant ou contient du diamant.

14. Dispositif selon l'une quelconque des revendications précédentes, **caractérisé en ce que** le matériau de support est doté d'éléments accroissant sa conductivité électrique.

15. Dispositif selon l'une quelconque des revendications précédentes, **caractérisé en ce que** la cible comprend un filtre (82) laissant passer le rayonnement X produit dans les éléments cibles (48 - 54) et bloquant au moins en partie le rayonnement X produit dans l'élément de support (46).
